# EUROPÄISCHE PATENTSCHRIFT

(11) **EP 0 604 625 B1**
(45) Veröffentlichungstag und Bekanntmachung des Hinweises auf die Patenterteilung: **28.02.1996**
(21) Anmeldenummer: 93915873.9
(22) Anmeldetag: 10.07.1993
(51) Int. Cl.: F16D 69/04, F16D 65/092

(54) **GESINTERTER BREMSKLOTZ FÜR SCHEIBENBREMSEN**
SINTERED BRAKE PAD FOR DISC BRAKES
PLAQUETTE DE FREIN FRITTEE POUR FREINS A DISQUE

(30) Priorität: 16.07.1992 DE 4223417
(43) Veröffentlichungstag der Anmeldung: 06.07.1994
(73) Patentinhaber: SINTERMETALLWERK KREBSÖGE GMBH, D-42477 Radevormwald (DE)
(72) Erfinder: GONIA, Detlef, D-42719 Soligen (DE); MANOLACHE, Valentin, D-42477 Radevormwald (DE)
(74) Vertreter: Langmaack, Jürgen, Dipl.-Ing.
(86) Internationale Anmeldenummer: EP9301811
(87) Internationale Veröffentlichungsnummer: WO9402754

(56) Entgegenhaltungen:
- WO-A-82/00051
- DE-B- 1 179 060
- DE-C- 807 950
- GB-A- 2 058 259
- US-A- 3 552 526

## Beschreibung

Die Erfindung betrifft einen Bremsklotz für Scheibenbremsen mit einem Reibbereich und einem Rückenbereich aus gesinterten Materialien auf pulvermetallurgischer Basis.

Aus der US-PS 3 552 526 ist ein Reibklotz der vorstehend bezichneten Art bekannt. Derartige Reibklötze besitzen den Vorteil einer hohen Eigensteifigkeit, so daß sie als Monoblock hergestellt werden können. Der Nachteil derartiger gesinterter Reibklötze besteht jedoch darin, daß ein gesintertes Reibmaterial aufgrund der Zusammensetzung verhältnismäßig spröde ist, so daß aus Festigkeitsgründen im mechanisch beanspruchten Rückenbereich, beispielsweise für die durch Löcher gebildeten Befestigungsmittel besondere Vorkehrungen in Form eines umlaufenden Metallrahmens vorgesehen werden müsen. Die Verbindung zwischen dem Reibblock einerseits und dem Metallrahmen andererseits ist fertigungstechnisch aufwendig, beseitigt aber die Gefahr von Ausbrüchen im Bereich der Befestipunpslöcher nicht.

Der Erfindung liegt nun die Aufgabe zugrunde, einen Bremsklotz der eingangs bezeichneten Art in Bezug auf Herstelung und Gebrauch zu verbessern.

Diese Aufgabe wird gemäß der Erfindung dadurch gelöst, daß das gesinterte Material des Rückenbereichs eine höhere Dichte als das Material des Reibbereichs aufweist.

In der bevorzugten Aufgestaltung der Erfindung weist das gesinterte Material des Rückenbereichs einen höheren Metallanteil als das Material des Reibbereichs auf.

Ein derart aufgebauter Bremsklotz hat den Vorteil, daß er als monolither Block in einem gleichförmigen Herstellungsverfahren, nämlich nur durch ein Sinterverfahren hergestellt werden kann. Das für den Reibbereich einzusetzende pulvermetallurgische Material ist ausschließlich auf seine reibtechnische Eigenschaft abgestellt und besteht im wesentlichen aus einer metallischen Matrix, in die die eigentlichen "Relbwerkstoffe" durch einen Sinterprozeß eingebunden- sind. Hierbei muß eine Sintertemperatur zwischen 800 und 1000°C eingehalten werden. Wird mit einer höheren Sintertemperatur gearbeitet, dann verändern sich auch infolge metallurgischer Veränderungen der metallischen Matrix die Reibeigenschaften des Reibbereiches in Bezug auf seine verschleißende Einwirkung auf die Bremsscheibe nachteilig. Ein derartiges Material für den Reibbereich kann aus diesen Gründen auch nicht auf eine Stahlplatte aufgesintert werden. Ein Auflöten auf eine Stahlplatte ist aufgrund der Zusammensetzung sehr aufwendig. Bei der erfindungsgemäßen Lösung kann nun aufgrund der Zusammensetzung eine praktisch metallische Rückenplatte für Befestigungszwecke in einem Arbeitsgang erzeugt werden, wobei aufgrund der Zusammensetzung die für das Material des Reibbereiches maximal zulässige Sintertemperatur nicht überschritten wird.

Es hat sich gezeigt, daß sich auf diese Weise auch mit für Stahl unüblich niedrigen Sintertemperaturen von beispielsweise 950°C Zugfestigkeiten von 300 N/mm erzielen lassen. Diese Werte reichen für die zu erwartenden mechanischen Beanspruchungen durch den Bremskolben und die Befestigungsmittel vollkommen aus. Desweiteren hat sich gezeigt, daß beide Schichten einwandfrei zusammensintern und hierbei eine Verbindung zwischen Reibbereich und Rückenbereich mit hoher Festigkeit gegeben ist. Bevorzugt ist hierbei vorgesehen, daß zumindest das Pulvermaterial für den Rückenbereich Cu und Fe als Grundwerkstoff enthält. Das Pulvermaterial für den Rückenbereich ist bei den angegebenen Grundwerkstoffen so zusammengesetzt, daß es bei einer Sintertemperatur von 800 bis 1000°C zusammensintert. Auf diese Weise ist es möglich, einen durchgesinterten Bremsklotz für Scheibenbremsen herzustellen, der im mechanisch beanspruchten Rückenbereich eine höhere Dichte, insbesondere einen höheren Metallanteil aufweist als das Material für den Reibbereich, ohne daß der eigentliche "Reibwerkstoff" durch den Sinterprozeß nachteilig in seinem Gefüge verändert wird.

Besonders zweckmäßig ist es, wenn das Pulvermaterial für den Reibbereich und Pulvermaterial für den Rückenbereich in wenigstens zwei Schichten übereinander in Form gebracht, zusammengepreßt und zusammengesintert ist. Dies hat den Vorteil, daß genau definierte Pulvermaterialien für den Rückenbereich einerseits und für den Reibbereich andererseits eingesetzt werden können, wobei gewährleistet ist, daß diese auch fest zusammensintern und damit die geforderte Scherfestigkeit erreicht ist.

In vorteilhafter Ausgestaltung der Erfindung ist vorgesehen, daß das Pulvermaterial für den Rückenbereich aus einer Sinterlegierung besteht, die 5 bis 50 - vorzugsweise 10 bis 30 - Gewichtsprozente Cu-Legierung und als Rest Eisen- oder le giertes Eisenpulver enthält.

In Ausgestaltung der Erfindung ist vorgesehen, daß die Cu-Legierung für den Rückenbereich mindestens 50 Gewichtsprozente Cu und den Rest wenigstens ein Nichteisenmetall der Gruppe Sn, Zn, Ni, Ag, Al, Mn und/oder Mg aufweist.

In weiterer vorteilhafter Ausgestaltung der Erfindung ist vorgesehen, daß das Pulvermaterial für den Rückenbereich aus einer Sinterlegierung besteht, die aus Eisen und aus 5 bis 50 Gewichtsprozent Nichteisenmetallen der Gruppe Cu, Sn, Zn, Ni, Ag, Al, Mn und/oder Mg besteht.

In weiterer Ausgestaltung der Erfindung ist vorgesehen, daß zwischen der Schicht des pulvermetallurgischen Materials für den Reibbereich und der Schicht des pulvermetallurgischen Materials für den Rückenbereich eine Zwischenschicht aus einem Keramikpulver oder einer hochkeramikhaltigen Pulvermischung eingebracht, mit verpreßt und eingesintert ist. Während aufgrund des hohen Metallanteils gesinterter Reibklötze die beim Bremsvorgang entstehende Reibungswärme sehr schnell bis auf den Bremskolben durchgeleitet wird, und damit die Gefahr des Bremsfadings durch Dampfblasenbildung in der Hydraulikflüssigkeit besteht, kann durch das Einbringen einer dünnen Schicht von nur wenigen Millimetern eines Keramikpulvers, beispielsweise Zirkonoxid (ZrO₂) der Wärmedurchgang zeitlich verzögert werden, so daß unter Berücksichtigung der beim Bremsvorgang immer vorhandenen Kühlluft die Temperatur im Rückenbereich, d. h. an der Anlage des Bremsklotzes am Bremskolben, bei gleicher Bremsdauer etwa 10 bis 20°C niedriger liegt als bei einem Bremsklotz ohne derartige Zwischenschicht.

In vorteilhafter Ausgestaltung der Erfindung ist hierbei vorgesehen, daß die Zwischenschicht den Randbereich des Bremsklotzes nicht überdeckt, so daß hier das Material des Reibbereiches einerseits und das Material des Rückenbereiches andererseits unmittelbar zusammengesintert ist. Hierdurch wird die erforderliche Scherfestigkeit auch dann erreicht, wenn das eingebrachte Keramikpulver selbst nicht zusammensintert.

In einer weiteren Ausgestaltung der Erfindung ist vorgesehen, daß die höhere Dichte des Rückenbereichs durch ein beim Sintern dosiert von der Rückenfläche her eingeschmolzenes Lot bewirkt ist. Diese Anordnung hat den Vorteil, daß der Preßling zur Herstellung des Bremsklotzes praktisch aus einem homogenen Pulvermaterial hergestellt werden kann, das ausschließlich auf seine Eigenschaften als Reibwerkstoff abgestimmt und dementsprechend eine höhere Porosität aufweist. Durch das Eindringen des Lots in die Poren des Gefüges im Rückenbereich entsteht für diesen mechanisch zu beanspruchenden Teil des Bremsklotzes ein praktisch porenfreies Gefüge mit entsprechend hoher Festigkeit. Durch die Dosierung ist sichergestellt, daß das Lot nicht bis in den Reibbereich eindringen kann. Das Lot wird hierbei in einer in Form und Menge entsprechend dimensionierten Auflage auf den Grünling vor dem Sintern aufgelegt.

Die Erfindung wird anhand schematischer Zeichnungen eines Ausführungsbeispieles erläutert. Es zeigen:
- Fig. 1: einen als Monoblock im Sinterverfahren hergestellten Bremsklotz,
- Fig. 2: einen Schnitt gem. der Linie II-II in Fig. 1,
- Fig. 3: ein vergrößertes Schliffbild in 50facher Vergrößerung der Zone III in Fig. 2,
- Fig. 4: eine Ausführungsform mit keramischer Zwischenschicht.

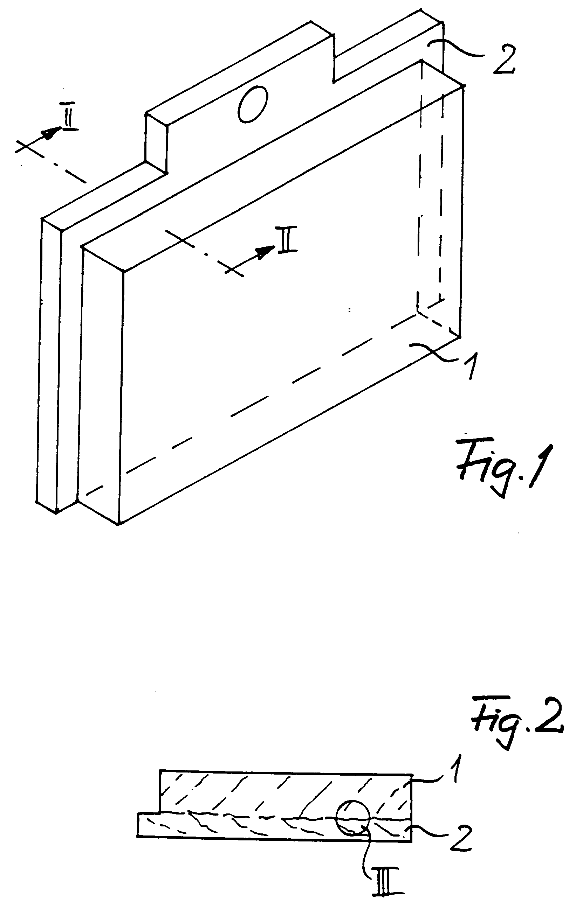

Der in Fig. 1 dargestellte Bremsklotz für eine Scheibenbremse weist einen Reibbereich 1 auf, der aus einem gesinterten Reibmaterial besteht. Die hierzu verwendete Sinterlegierung ist auf einem legierten Eisenpulver aufgebaut, das eine metallische Matrix besitzt, die mit entsprechenden sinterfähigen "Reibwerkstoffen" zusammengesintert ist. Das Verhältnis der metallischen Matrix zu den Reibwerkstoffen beträgt beispielsweise 75 : 25 Gewichtsprozent und besitzt eine Sintertemperatur von max. 1000°C.

Mit dem Reibbereich 1 ist ein Rückenbereich 2 als Befestigungsmittel zusammengesintert. Der Rückenbereich 2 besteht hierbei ebenfalls aus einem gesinterten Material auf pulvermetallurgischer Basis, das einen höheren Metallanteil aufweist als das Material des Reibbereiches 1 und das bei einer Temperatur von 800 bis 1000°C sintert. Der Rückenbereich 2 stellt damit praktisch eine "Metallplatte" dar mit einer Festigkeit von beispielsweise 300 N/mm, einer Dichte von 7,02 g/cm³ und einer Härte von 56 bis 62 HB. Das Material des Rückenbereiches kann hierbei, sofern erforderlich, in üblicher Weise mechanisch bearbeitet werden.

Wie die schematische Schnittdarstellung gem. Fig. 2, insbesondere aber die Vergrößerung der Übergangszone zwischen dem Reibbreich 1 einerseits und dem Rückenbereich 2 andererseits zeigt, ist zwar eine deutliche Trennlinie der beiden Materialschichten gegeben. Gleichwohl sind beide Schichten einwandfrei miteinander zusammengesintert. Dies wird insbesondere dadurch gefördert, daß bei der Herstellung die beiden Pulvermaterialien nacheinander in die Preßform eingebracht werden und anschließend miteinander verpreßt werden, so daß im Bereich der Grenzschicht zwischen dem Pulvermaterial des Reibbereiches und dem Pulvermaterial des Rückenbereiches eine einwandfreie und porenfreie Durchdringung gegeben ist.

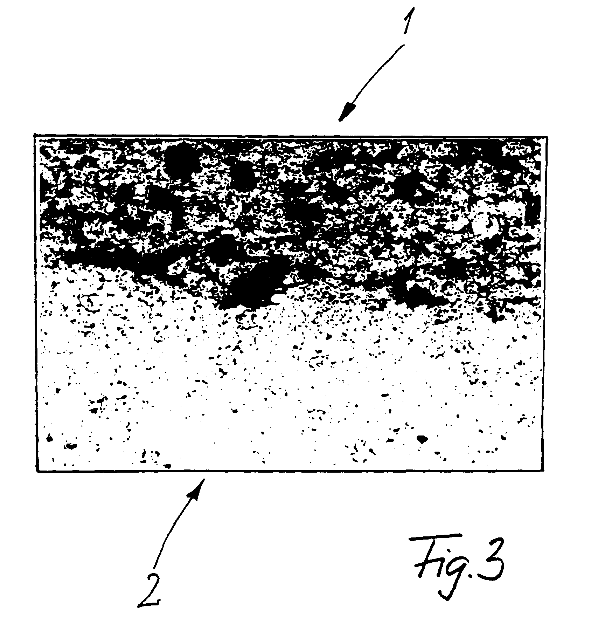

Fig. 3 zeigt ein ungeätztes Schliffbild der Zone III in Fig. 2 in 50 facher Vergrößerung. Das Schliffbild läßt deutlich den metallisch homogenen Aufbau des Materials des Rückenbereiches 2 erkennen. Ferner wird deutlich, daß der metallische Anteil im Reibmaterial 1 lediglich eine Matrix bildet, die eine Vielzahl nichtmetallischer Partikel einschließt. Der nahtlose Übergang zwischen dem überwiegend metallischen Rückenbereich in die metallische Matrix des Reibbereiches ist ebenfalls deutlich zu erkennen.

In Fig. 4 ist in einem Schnitt entsprechend Fig. 2 eine Ausführungsform dargestellt, bei der eine dünne Zwischenschicht 3 aus einem Keramikpulver mit eingesintert ist. Wie aus dem Schnittbild zu erkennen, wird bei der Herstellung zunächst das pulvermetallurgische Material für den Reibbereich 1 so vorgeformt, daß eine napf förmige Form erzielt wird. In diesen Hohlraum wird ein Keramikpulver oder eine hochkeramikhaltige Pulvermischung eingegeben und anschließend das pulvermetallurgische Material für den Rückenbereich aufgegeben, so daß die Endverpressung vorgenommen werden kann. Beim anschließenden Sintervorgang sintern das Material des Reibbereichs 1 und das Material des Rückenbereiches 2 am Rand umlaufend zusammen, so daß hier die geforderte feste Verbindung zwischen Reibbereich und Rückenbereich gegeben ist. Das Keramikpulver selbst sintert wegen der niedrigen Temperatur nicht zusammen, bildet jedoch infolge der Verpressung eine dichte Schicht mit schlechter Wärmeleitfähigkeit. Bei der Verwendung von keramikhaltigen Pulvermischungen können auch solche Legierungselemente zugemischt werden, die bei der gegebenen maximalen Sintertemperatur von 1000°C zumindest eine gewisse Verfestigung durch einen SIntervorgang bewirken, ohne hierbei die Wärmedurchlässigkeit der Zwischenschicht zu erhöhen.

## Patentansprüche

1. Bremsklotz für Scheibenbremsen mit einem Reibbereich (1) und einem Rückenbereich (2) aus gesinterten Materialien auf pulvermetallurgischer Basis, dadurch gekennzeichnet, daß das gesinterte Material des Rückenbereichs (2) eine höhere Dichte als das Material des Reibbereichs (1) aufweist.

2. Bremsklotz nach Anspruch 1, dadurch gekennzeichnet, daß das gesinterte Material des Rückenbereichs (2) einen höheren Metallanteil als das Material des Reibbereichs (1) aufweist.

3. Bremsklotz nach Anspruch 1 oder 2, dadurch gekennzeichnet, daß das Pulvermaterial Cu und Fe als Grundwerkstoff enthält.

4. Bremsklotz nach Anspruch 1 oder 2 und 3, dadurch gekennzeichnet, daß das Pulvermaterial für den Rückenbereich (2) bei einer Sintertemperatur von 800 bis 1000°C zusammensintert.

5. Bremsklotz nach einem der Ansprüche 1 bis 4, dadurch gekennzeichnet, daß das Pulvermaterial für den Reibbereich (1) und das Pulvermaterial für den Rückenbereich (2) in wenigstens zwei Schichten übereinander in Form gebracht, zusammengepreßt und zusammengesintert ist.

6. Bremsklotz nach Anspruch 5, dadurch gekennzeichnet, daß das Pulvermaterial für den Rückenbereich (2) aus einer Sinterlegierung besteht, die 5 bis 50 - vorzugsweise 10 bis 30 - Gewichtsprozent Cu-Legierung und als Rest Eisen- oder legiertes Eisenpulver enthält.

7. Bremsklotz nach einem der Ansprüche 1 bis 5, dadurch gekennzeichnet, daß die Cu-Legierung für den Rückenbereich (2) mindestens 50 Prozent Cu und mindestens ein Nichteisenmetall der Gruppe Cu, Sn, Zn, Ni, Ag, Al, Mn und/oder Mg aufweist.

8. Bremsklotz nach einem der Ansprüche 1 bis 7, dadurch gekennzeichnet, daß das Pulvermaterial für den Rückenbereich (2) aus einer Sinterlegierung besteht, die Eisen und 5 bis 50 Gewichtsprozent Nichteisenmetalle aus der Gruppe Cu, Sn, Zn, Ni, Ag, Al, Mn und/oder Mg aufweist.

9. Bremsklotz nach einem der Ansprüche 1 bis 8, dadurch gekennzeichnet, daß zwischen der Schicht des pulvermetallurgischen Materials für den Reibbereich (1) und der Schicht des pulvermetallurgischen Materials für den Rückenbereich (2) eine Zwischenschicht (3) aus einem Keramikpulver oder einer hochkeramikhaltigen Pulvermischung eingebracht, mitverpreßt und eingesintert ist.

10. Bremsklotz nach Anspruch 9, dadurch gekennzeichnet, daß die Zwischenschicht (3) den Randbereich des Reibbereiches (1) nicht überdeckt, so daß hier das Material des Reibbereiches (1) und das Material des Rückenbereiches (2) unmittelbar zusammengesintert sind.

11. Bremsklotz nach einem der Ansprüche 1 bis 10, dadurch gekennzeichnet, daß die höhere Dichte des Rückenbereiches (2) durch ein beim Sintern dosiert von der Rückenfläche her eingeschmolzenes Lot bewirkt ist.

## Claims

1. Brake block for disk brakes with a friction zone (1) and a rear zone (2) made of sintered materials on a powder metallurgy base, characterized in that sintered material of a rear zone (2) has a higher density than material of a friction zone (1).

2. Brake block in accordance with claim 1, characterized in that sintered material of a rear zone (2) has a higher metal content than material of a frictional zone (1).

3. Brake block in accordance with claim 1 or 2, characterized in that powder material concerned contains Cu and Fe as base material.

4. Brake block in accordance with claim 1, 2 or 3, characterized in that powder material for a rear zone (2) is sintered together at a temperature of 800 to 1000°C.

5. Brake block in accordance with any one of claims 1 to 4, characterized in that powder material for a friction zone (1) and powder material for a rear zone (2) is applied in at least two layers, one on top of another, compressed and sintered together.

6. Brake block in accordance with claim 5, characterized in that powder material for a rear zone (2) comprises a sinter alloy which contains 5 to 50, preferably 10 to 30, percent weight copper alloy, remaining material comprising iron or alloyed iron powder.

7. Brake block in accordance with any one of claims 1 to 5, characterized in that a copper alloy for a rear zone (2) has at least 50 percent copper and at least one non-iron metal of a group-comprising Cu, Sn, Zn, Ni, Ag, Al, Mn and/or Mg.

8. Brake block in accordance with any one of claims 1 to 7, characterized in that powder material for a rear zone (2) comprising a sinter alloy which shows 5 to 50 percent weight of non-iron metal from a group comprising Cu, Sn, Zn, Ni, Ag, Mn and/or Mg.

9. Brake block in accordance with any one of claims 1 to 8, characterized in that an intermediate layer (3) made of a ceramic powder, or a powder mixture with a high ceramic content, is introduced, compressed in and sintered in between a layer of powder metallurgical material for a frictional zone (1) and a layer of powder metallurgical material for a rear zone (2).

10. Brake block in accordance with claim 9, characterized in that an intermediate layer (3) does not cover a rim zone of a friction zone (1), such that, here, material of a friction zone (1) and material of a rear zone (2) are sintered directly together.

11. Brake block in accordance with any one of claims 1 to 10, characterized in that a higher density of a rear zone (2) is caused by a solder, measured in during sintering, which melts forwards from a rear surface.

## Revendications

1. Plaquette de frein pour freins à disque, comprenant une zone de friction (1) et une zone de dos (2) en matériaux frittés issus de la métallurgie des poudres, caractérisée en ce que le matériau fritté de la zone de dos (2) présente une densité supérieure à celle du matériau de la zone de friction (1).

2. Plaquette de frein selon la revendication 1, caractérisée en ce que le matériau fritté de la zone de dos (2) présente une proportion de métal supérieure à celle du matériau de la zone de friction (1).

3. Plaquette de frein selon l'une des revendications 1 ou 2, caractérisée en ce que le matériau en poudre contient du Cu et du Fe comme métaux de base.

4. Plaquette de frein selon les revendications 1 ou 2 et 3, caractérisée en ce que le matériau en poudre de la zone de dos (2) est fritté à une température de frittage comprise entre 800 et 1 000°C.

5. Plaquette de frein selon l'une des revendications 1 à 4, caractérisée en ce que le matériau en poudre de la zone de friction (1) et le matériau en poudre de la zone de dos (2) sont moulés sous la forme d'au moins deux couches superposées, comprimés ensemble et frittés ensemble.

6. Plaquette de frein selon la revendication 5, caractérisée en ce que le matériau en poudre de la zone de dos (2) est constitué d'un alliage fritté contenant de 5 à 50 % en poids - de préférence de 10 à 30 % en poids - d'alliage de Cu, le reste étant constitué de poudre de fer ou de fer allié.

7. Plaquette de frein selon l'une des revendications 1 à 5, caractérisée en ce que l'alliage de Cu de la zone de dos (2) comprend au moins 50 % de Cu et au moins un métal non ferreux du groupe Cu, Sn, Zn, Ni, Ag, Al, Mn et/ou Mg.

8. Plaquette de frein selon l'une des revendications 1 à 7, caractérisée en ce que le matériau en poudre de la zone de dos (2) est constitué d'un alliage fritté comprenant du fer et de 5 à 50 % en poids de métaux non ferreux du groupe Cu, Sn, Zn, Ni, Ag, Al, Mn et/ou Mg.

9. Plaquette de frein selon l'une des revendications 1 à 8, caractérisée en ce que, entre la couche de matériau issu de la métallurgie des poudres et destiné à la zone de friction (1) et la couche de matériau issu de la métallurgie des poudres et destiné à la zone de dos (2), est insérée une couche intermédiaire (3) qui est constituée de poudre céramique ou d'un mélange pulvérulent à teneur élevée en céramique et qui est comprimée avec les deux autres couches et frittée entre elles.

10. Plaquette de frein selon la revendication 9, caractérisée en ce que la couche intermédiaire (3) ne recouvre pas la zone de bord de la zone de friction (1), de sorte qu'à cet endroit le matériau de la zone de friction (1) et le matériau de la zone de dos (2) sont directement frittés ensemble.

11. Plaquette de frein selon l'une des revendications 1 à 10, caractérisée en ce que la densité supérieure de la zone de dos (2) est due à un métal d'apport fondu de manière dosée à partir de la face arrière lors du frittage.
